# EUROPÄISCHE PATENTANMELDUNG

(11) **EP 3 611 689 A1**
(43) Veröffentlichungstag der Anmeldung: **19.02.2020**
(21) Anmeldenummer: 18189102.9
(22) Anmeldetag: 15.08.2018
(51) Int. Cl.: G06Q 50/04, G06Q 50/08, G06Q 10/06

(54) **VERFAHREN UND MESSEINRICHTUNG ZUR ANALYSE DER MASSHALTIGKEIT EINES BAUELEMENTS IN BEZUG AUF DIE EINBAUUMGEBUNG**

(71) Anmelder: SCHÖCK BAUTEILE GmbH, 76534 Baden-Baden (DE)
(72) Erfinder:
(74) Vertreter: Kietzmann, Lutz

(57) **Zusammenfassung**

Es ist ein computergestütztes Verfahren sowie eine Messeinrichtung zur Analyse der Maßhaltigkeit eines Bauelements in Bezug auf die Einbauumgebung angegeben, mittels welchem ein Vergleich eines angestrebten Einbauzustandes mit einem temporären Ist-Zustand durchgeführt werden kann. Weiterhin ist eine Messeinrichtung, mittels welcher Verfahrensschritte des vorgenannten Verfahrens ausgeführt werden können, angegeben.

## Beschreibung

### TECHNISCHES GEBIET

Die Erfindung betrifft ein computergestütztes Verfahren zur Analyse der Maßhaltigkeit von einem Bauelement in Bezug auf die Einbauumgebung, eine Messeinrichtung zur Analyse der Maßhaltigkeit eines Bauelements in Bezug auf die Einbauumgebung, ein Computerprogrammprodukt und ein computerlesbares Medium.

### HINTERGRUND DER ERFINDUNG

Im Zuge der Planung eines Bauvorhabens kommen zunehmend computergestützte Verfahren zum Einsatz, welche Planungsdaten hinsichtlich des zu errichtenden Gebäudes sowie spezifischer Bauelemente oder weitergehender Anforderungen an zu verwendende Baustoffe generieren und/oder speichern können. Entsprechende Planungsdaten werden typischerweise während der Durchführung des Bauvorhabens nicht mehr verändert, da etwaige Änderungen an z.B. Baustoffen oder auch spezifischen Bauelementen eine neue Ausschreibung zur Folge haben könnten.

Es sind beispielsweise Programme bekannt, die eine Modellierung eines Bauvorhabens ermöglichen. Die Überprüfung und Dokumentation der tatsächlichen Einbausituation im Rahmen der Bauphase gegenüber einem geplanten Einbauzustand sind derzeit jedoch noch nicht standardmäßig vorgesehen.

### ZUSAMMENFASSUNG DER ERFINDUNG

Die Aufgabe der vorliegenden Erfindung kann darin gesehen werden, Mittel zur Qualitätssicherung des tatsächlichen Einbauzustandes eines Bauelements in Bezug auf den in den Planungsdaten definierten, angestrebten Soll-Einbauzustand zur Verfügung zu stellen, und damit die Sicherheit während und nach Abschluss der Bauphase zu erhöhen.

Die Aufgabe wird durch die Gegenstände der unabhängigen Patenansprüche gelöst. Weiterbildungen und Ausführungsformen sind in den Unteransprüchen und der nachfolgenden Beschreibung enthalten.

Die im Folgenden beschriebenen Ausführungsbeispiele betreffen gleichermaßen das computergestützte Verfahren sowie die Messeinrichtung. Mit anderen Worten, können Merkmale, die im Folgenden in Bezug auf das computergestützte Verfahren beschrieben werden, ebenso als Merkmale oder Teilaspekte der Messeinrichtung angesehen werden, und umgekehrt.

Gemäß einem Aspekt der Erfindung ist ein computergestütztes Verfahren zur Analyse der Maßhaltigkeit von mindestens einem Bauelement in Bezug auf die Einbauumgebung angegeben. Dabei weist das Verfahren die im Folgenden beschriebenen Schritte auf: In einem ersten Schritt werden Planungsdaten, die zumindest ein Bauelement betreffen, erzeugt und gespeichert. Das Erzeugen der Planungsdaten kann computergestützt, beispielsweise unter Zuhilfenahme einer Planungssoftware, oder auch ohne die Zuhilfenahme eines Computers erfolgen. Die Planungsdaten können anschließend in einem Speicher, einer dafür vorgesehenen Datenbank oder auch in einer Cloud gespeichert werden. Dabei betreffen die Planungsdaten einen angestrebten Einbauzustand des mindestens einen Bauelements. Unter einem angestrebten Einbauzustand ist dabei ein idealer bzw. optimaler Einbauzustand anzusehen, der z.B. unter der Annahme einer exakten Positionierungsmöglichkeit des mindestens einen Bauelements erreicht werden könnte. In einem nächsten Schritt werden auf das mindestens eine Bauelement bezogene Toleranzdaten erzeugt und gespeichert, wobei die vorgenannten Toleranzdaten Abweichungen von dem angestrebten Einbauzustand angeben, welche aus baurechtlichen und/oder bautechnischen Gründen zugelassen werden können. Wie auch im Fall der Planungsdaten kann die Erzeugung der Toleranzdaten computergestützt, beispielsweise unter Zuhilfenahme einer Planungssoftware, oder auch ohne die Zuhilfenahme eines Computers erfolgen. Die Toleranzdaten können anschließend vorzugsweise in demselben Speicher, einer dafür vorgesehenen Datenbank oder auch in einer Cloud gespeichert werden, wie zuvor die Planungsdaten. Durch Erzeugung und Hinterlegung der Toleranzdaten wird der Tatsache Rechnung getragen, dass bei dem Versuch der Realisierung eines angestrebten Einbauzustandes Abweichungen und Einbaufehler auftreten können. Letztere Abweichungen oder auch Einbaufehler können, müssen aber nicht einen Einfluss auf die Sicherheit und Qualität des zu errichtenden Gebäudes haben; ob dies der Fall ist, hängt entscheidend von der Größe der Abweichung vom angestrebten, idealen Einbauzustand an. Durch die Toleranzdaten wird beispielsweise ein Intervall um angestrebte Einbaukoordinaten eines Bauelements angegeben, innerhalb dessen aus bautechnischen und/oder baurechtlichen Gründen davon auszugehen ist, dass Sicherheit und Qualität des zu errichtenden Gebäudes bzw. Gebäudeteils oder - abschnittes gewährleistet sind. Auch können sich die Toleranzdaten beispielsweise auf ein Verhältnis bei einem Materialgemisch, Positionierung der Schalung, Anzahl, Abstand, Relativlage zum Bauelement und Durchmesser der angrenzenden, bauseitigen Bewehrung, Abmessungen der anzuschließenden Bauteile beziehen.

Die beiden vorgenannten Schritte beziehen sich offenbar auf eine Planungsphase eines Bauvorhabens. In einem weiteren Verfahrensschritt wird das mindestens eine Bauelement an einem Einbauort auf der Baustelle positioniert. Dabei ist durch das Positionieren ein temporärer Ist-Zustand des mindestens einen Bauelements definiert. Unter dem Positionieren ist in diesem Zusammenhang ein Zustand zu verstehen, in dem die Position bzw. Lage und Orientierung des Bauelements noch Änderungen unterworfen werden kann. Mit anderen Worten ist das Bauelement im durch das Positionieren gegebenen temporären Ist-Zustand noch nicht endgültig fixiert. Vielmehr ist ein Verschieben, Verdrehen oder auch Entfernen und Austauschen des Bauelements ausgehend vom temporären Ist-Zustand noch möglich. Dieser und die folgenden Verfahrensschritte beziehen sich damit offenbar auf die Bauphase auf der Baustelle selbst. In einem weiteren Verfahrensschritt wird nun der angestrebte, durch unter anderem die Planungsdaten beschriebene Einbauzustand mit dem tatsächlich vorliegenden temporären Ist-Zustand verglichen. Im Anschluss an die vorherigen Schritte wird eine der im Folgenden benannten Entscheidungen über den endgültigen, das Bauelement an seiner Position fixierenden Einbau nach Maßgabe der nachfolgenden Kriterien getroffen. Weist der temporäre Ist-Zustand Abweichungen vom angestrebten Einbauzustand auf, welche durch die Toleranzdaten als zulässig definiert sind, so wird ein nächster Bauschritt freigegeben. Ein nächster Bauschritt kann dabei z.B. die endgültige Fixierung durch beispielsweise ein Einbetonieren des Bauelements, aber beispielsweise auch eine auf ein weiteres Bauelement bezogene Positionierung sein. Weist der temporäre Ist-Zustand hingegen Abweichungen vom angestrebten Einbauzustand auf, welche durch die Toleranzdaten als nicht zulässig definiert sind, welche aber unter Einbeziehung äußerer und innerer Einflüsse auf das Bauelement mittels eines Kriterienkatalogs ausnahmsweise als zulässig bewertet werden, so kann eine Sonderfreigabe des Ist-Zustandes erfolgen, und es kann ebenfalls ein nächster Bauschritt freigegeben werden. Dabei kann der Kriterienkatalog Daten zu mindestens einem der Einflüsse von Windlasten, Massenlasten, Temperaturschwankungen im Jahresverlauf, Erdbebenwahrscheinlichkeit und/oder Hochwasserwahrscheinlichkeit am Ort der Baustelle bzw. am Ort der geplanten Verbauung des mindestens einen Bauelements enthalten. Es kann vorgesehen sein, dass in automatisierter Weise und/oder durch Beurteilung durch einen Experten, der Ist-Zustand unter Berücksichtigung der Daten des Kriterienkatalogs evaluiert wird, und eine nicht mehr innerhalb der Toleranzgrenzen liegende Abweichung als zulässig bewertet werden kann. Dies kann beispielsweise dann der Fall sein, wenn bekannt ist, dass die Toleranzdaten unter anderem auf strikte Grenzen für Massenlasten rekurrieren, welche sich auf ein vielstöckige Gebäude beziehen, das zu errichtende Gebäude jedoch z.B. als einstöckiges Haus mit Flachdach geplant ist. Zu einer Sonderfreigabe kann es auch dann kommen, wenn beispielsweise ein lichter Abstand zweier benachbarter Bauelemente untereinander vorliegt, Bauelemente gegenüber der geplanten Einbaulinie / Sollanordnung horizontal verdreht sind, wenn die Verdrehung <= 180° beträgt, oder auch, wenn das Bauelement (z.B. ein Balkon) an sich gegenüber der geplanten Relativposition zum Gebäudegrundriss bzw. der entsprechenden Horizontalschnittebene abweicht, und diese beispielhaften Abweichungen nicht innerhalb eines durch Toleranzdaten abgedeckten Rahmens liegen, der korrespondierende Ist-Zustand des Bauelements jedoch unter Berücksichtigung eines Kriterienkatalogs zur Sonderfreigabe "sonderfrei" gegeben werden kann. Weist der temporäre Ist-Zustand des Bauelements größere Abweichungen vom angestrebten Einbauzustand auf, als in den Toleranzdaten erfasst, und kann es nicht zu einer Sonderfreigabe des Ist-Zustands kommen, so kann eine Korrektur des temporären Einbauzustandes erfolgen, bis der durch die Korrekturmaßnahmen hergestellte Zustand innerhalb eines Bereichs um den angestrebten Einbauzustand liegt, welcher durch die Toleranzdaten als zulässig definiert ist, bzw. welcher unter Umständen eine Sonderfreigabe erlaubt.

Bei dem Bauelement kann es sich beispielsweise um ein Dämmelement, ein Schalldämmelement, ein Bewehrungselement, oder ein Abschalelement handeln.

In anderen Worten ist ein computergestütztes Verfahren angegeben, das Planungsdaten einen angestrebten Einbauzustand mindestens ein Bauelement betreffen erzeugt, sowie Toleranzdaten, welche zulässige Abweichungen um den angestrebten Einbauzustand umfassen. Eine tatsächliche Positionierung des mindestens einen Bauelements erfolgt in einem folgenden Schritt, wobei durch die Positionierung das mindestens eine Bauelement noch nicht endgültig fixiert ist, sondern Korrekturen an seiner Position vorgenommen werden können. Abhängig von der Güte der Positionierung kann eine Freigabe eines nächsten Bauschrittes erfolgen - falls die Position z.B. innerhalb eines Toleranzintervalls um den angestrebten Einbauzustand der Planungsdaten liegt -, eine Sonderfreigabe - falls aus baurechtlichen und/oder bautechnischen Gründen die vorliegende Abweichung trotz überschreiten eines Toleranzintervalls dennoch hingenommen werden kann, oder kann die Notwendigkeit einer Korrektur des angezeigt und eine entsprechende Korrektur durchgeführt werden.

Die Datenbank, in der die auf das Bauelement bezogenen Daten gespeichert werden, kann auf einem Computer, einem Server oder in einer Cloud hinterlegt sein. Das Erzeugen von Daten, die in der Datenbank gespeichert werden sollen, kann durch eine Erzeugungseinheit eines Computers durchgeführt werden. Daten, die in der Datenbank gespeichert werden sollen, können auch durch eine Empfangseinheit beispielsweise eines Computers empfangen werden und durch eine Speichereinheit des Computers entsprechend in der Datenbank hinterlegt werden.

Der angestrebte Einbauzustand, welcher einen Soll-Zustand beschreibt, kann unter anderem Daten zur angestrebten horizontalen und vertikalen Ausrichtung des mindestens einen Bauelements, seiner angestrebten Orientierung, einer möglichen angestrebten Verdrehung oder Rotation, seinem angestrebten relativen Abstand zu einem oder mehreren Nachbarelementen, und/oder seine angestrebten GPS-Positionsdaten, die die geplante Lage des Bauelements angeben, umfassen. Entsprechend wird der temporäre Ist-Zustand durch z.B. Koordinaten bzw. Daten, die den tatsächlichen temporären Zustand des Bauelements betreffen, beschrieben, d.h. zum Beispiel Daten zur tatsächlichen horizontalen und vertikalen Ausrichtung des Bauelements.

Vorzugsweise werden die auf eine Freigabe, eine Sonderfreigabe oder eine Korrektur des temporären Einbauzustandes bezogenen Daten dokumentiert und in einer Datenbank hinterlegt.

Gemäß einem Ausführungsbeispiel der Erfindung ist als ein den vorgenannten Schritten folgender Schritt der endgültige Einbau des mindestens einen Bauelements vorgesehen. Dazu soll das Bauelement endgültig fixiert werden, so dass eine anschließende Korrektur der Position des Bauelementes daraufhin nicht mehr möglich ist. Der endgültige Einbau kann dabei beispielsweise durch ein Einbetonieren, ein Verkleben, ein Festbinden mit Draht, einem Befestigen mithilfe einer vorgefertigten Einbaulehre, einem Festnageln auf einer korrespondierenden Horizontalholzschalung, oder auch einem Befestigen mit Befestigungsmagneten auf einer Horizontalstahlschalung vorgenommen werden.

In einem weiteren Ausführungsbeispiel ist vorgesehen, dass den Zustand des endgültigen Einbaus des mindestens einen Bauelements betreffende Einbaudaten erzeugt und gespeichert werden.

In einem weiteren Ausführungsbeispiel ist der weitere Schritt vorgesehen, dass die - falls notwendige - Korrektur des temporären Einbauzustandes mittels eines Krans oder eines Roboters durchgeführt wird. Dazu können beispielsweise Korrekturvorgaben an einen Kran oder Roboter übermittelt werden, und der Kran oder Roboter kann entsprechend - manuell oder auch automatisiert - angesteuert werden, um die Korrekturvorgaben umzusetzen.

In einem weiteren Ausführungsbeispiel ist der Schritt des Erzeugens und Speicherns von Korrekturdaten vorgesehen. Beispielsweise können im Anschluss an die Feststellung der Notwendigkeit einer Korrektur des temporären Einbauzustandes entsprechende Korrekturdaten erzeugt und an einer geeigneten Stelle gespeichert werden. Vorzugsweise können die Korrekturdaten in demselben Speicher hinterlegt werden, in dem auch Planungs- und Toleranzdaten gespeichert sind. Vorbeschriebene Korrekturdaten beziehen sich damit auf eine noch auszuführende, angestrebte Korrektur des temporären Einbauzustandes. Alternativ oder zusätzlich können auch die Daten, die nach Durchführung der Korrektur durch beispielsweise einen Kran oder Roboter den tatsächlichen Korrekturwerten entsprechen, erzeugt und gespeichert werden.

In einem weiteren Ausführungsbeispiel weist der Vergleich des angestrebten Einbauzustandes mit dem temporären Ist-Zustand zumindest einen der im Folgenden beschriebenen Unterschritte auf: den Vergleich der Lage von Messpunkten und/oder Markierungen, welche auf dem mindestens einen Bauelement sowie beispielsweise einem benachbarten Bauelement oder Gebäudeteil angebracht sind;, den Vergleich der Position von "halbierten" QR Codes auf dem mindestens einen Bauelement und einem oder mehreren benachbarten Bauelementen oder Gebäudeteilen; den Vergleich von Mustern auf dem mindestens einen Bauelement und einem oder mehreren benachbarten Bauelementen oder Gebäudeteilen; die Vermessung der Fugenbreiten zwischen dem mindestens einen Bauelement im temporären Ist-Zustand zu einem benachbarten Bauelement oder Gebäudeteil; die Vermessung der Winkel in einem durch mehrere hintereinander angeordnete Bauelemente gegebenen Polygonzug.

Durch die Anbringung von Mustern, Markierungen, Messpunkten und ähnlichen optischen Markern auf dem Bauelement und benachbarten Elementen - Bauelementen oder auch angrenzenden Gebäudeteilen - kann der Vergleich zwischen Soll- und temporären Ist-Zustand erleichtert werden. Beispielsweise kann eine Scanpistole zum Einsatz kommen, mittels derer ein einfachere Vergleich durchgeführt werden kann, wenn jeweils ein halbierter QR-Code auf dem mindestens einen Bauelement und einem benachbarten Bauelement angebracht ist. Die Scanpistole kann den zusammengefügten QR-Code nur dann lesen und eine Freigabe eines nächsten Bauschrittes z.B. anzeigen oder die entsprechende Information an eine Datenbank oder einen Computer z.B. einer Bauaufsicht oder eines Poliers senden, wenn der QR-Code richtig zusammengefügt ist. Letztere ist der Fall, wenn der temporäre Ist-Zustand dem angestrebten Einbauzustand entspricht, bzw. wenn die Abweichungen zwischen den vorgenannten Zuständen vernachlässigbar sind (z.B. im Rahmen der Messgenauigkeit der Scanpistole).

Gemäß einem zweiten Aspekt der Erfindung ist eine Messeinrichtung zur Analyse der Maßhaltigkeit von mindestens einem Bauelement in Bezug auf die Einbauumgebung nach einem vorstehend beschriebenen Verfahren angegeben. Dabei weist die Messeinrichtung eine Erzeugungseinheit, eine Speichereinheit, eine Empfangseinheit, sowie eine Analyseeinheit auf. Die Erzeugungseinheit ist dazu eingerichtet, Planungsdaten und Toleranzdaten des mindestens einen Bauelements zu erzeugen. Die Planungs- und Toleranzdaten können anschließend in der Speichereinheit gespeichert werden. Mittels der Empfangseinheit der Messeinrichtung können auf einen temporären Ist-Zustand bezogene Daten empfangen werden. Schließlich ist die Analyseeinheit dazu eingerichtet, den temporären Ist-Zustand mit dem angestrebten Einbauzustand zu vergleichen und zu bewerten bzw. zu beurteilen. Basierend auf der Bewertung bzw. Beurteilung kann eine Freigabe eines nächsten Bauschritts erfolgen, eine Sonderfreigabe, oder auch ein Korrekturvorschlag. Die entsprechend zutreffende der letztgenannten Optionen kann beispielsweise einem Nutzer auf einem Bildschirm angezeigt werden.

Es kann beispielsweise vorgesehen sein, dass die Messeinrichtung durch einen oder mehrere Nutzer bedient werden kann, welche beispielsweise durch die Eingabe von Befehlen über eine Tastatur oder einen Bildschirm oder durch sprachliche Anweisungen das System veranlassen, unter anderem die Planungsdaten und Toleranzdaten zu erzeugen und in einer Datenbank zu speichern.

Gemäß einem weiteren Ausführungsbeispiel ist die Empfangseinheit der Messeinrichtung als eine Bildverarbeitungseinheit mit mindestens einer Kamera zur Erfassung eines temporären Einbauzustandes des mindestens einen Bauelements ausgeführt. Dabei kann es sich um beispielsweise eine Stereokamera, mittels welcher Tiefenmaße beurteilt werden können, oder eine Kamera, die im optischen und/oder infraroten Wellenlängenbereich arbeitet handeln. Beispielsweise kann eine Kamera, welche sowohl im optischen als auch infraroten Bereich arbeitet dazu genutzt werden, sich ergänzende Informationen mittels der unterschiedlichen Wellenlängenbereiche zu gewinnen. Es ist auch denkbar, dass eine Bildverarbeitungseinheit mittels eines Radars oder eines LASERs Bilder aufzeichnet. Insbesondere auf Baustellen kann beispielsweise Radar zum Einsatz kommen, wenn aufgrund eines hohen Staubgehalts in der Luft die Verwendung eines LASERs oder auch von Licht im optischen Bereich nicht angezeigt ist.

Gemäß einem weiteren Ausführungsbeispiel ist die Messeinrichtung beweglich an einem Kran angebracht bzw. hängt an einem Kran. In diesem Fall kann die Messeinrichtung an einen Ort auf der Baustelle verbracht werden, an dem als nächstes ein Vergleich eines Soll- mit einem temporären Ist-Zustand unter Zuhilfenahme der Messeinrichtung durchgeführt werden soll.

Gemäß einem dritten Aspekt der Erfindung ist ein Computerprogrammprodukt angegeben, welches Befehle umfasst, welche bei der Ausführung durch einen Prozessor eines Computers letzteren veranlassen, ein Verfahren gemäß oben beschriebener Verfahrensschritte auszuführen. Vorzugsweise ist das Computerprogrammprodukt auf einer Analyseeinheit einer vorstehend beschriebenen Messeinrichtung ausführbar.

Gemäß einem vierten Aspekt der Erfindung ist ein computerlesbares Medium angegeben, auf dem das vorgenannte Computerprogrammprodukt abgespeichert ist.

### KURZE BESCHREIBUNG DER FIGUREN

Fig. 1 zeigt eine schematische Darstellung eines computergestützten Verfahrens gemäß einem Ausführungsbeispiel der Erfindung.

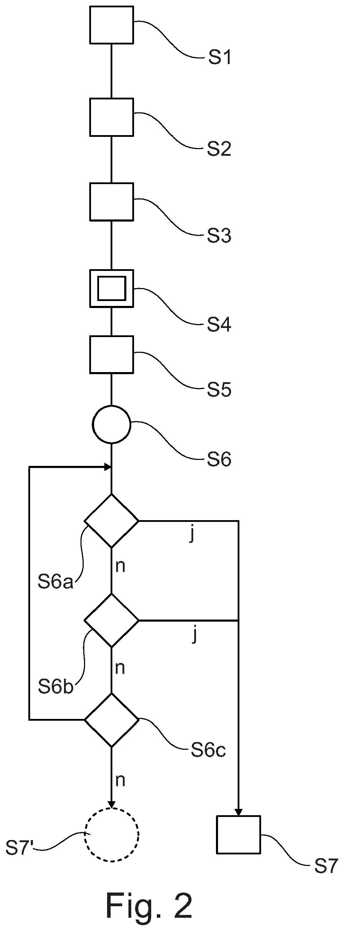

Fig. 2 zeigt eine schematische Darstellung eines computergestützten Verfahrens gemäß einem weiteren Ausführungsbeispiel der Erfindung.

Die Darstellungen der Figuren sind schematisch und nicht maßstäblich. Die Verwendung von Bezugszeichen in den Ansprüchen ist als nicht einschränkend anzusehen.

### DETAILLIERTE BESCHREIBUNG VON AUSFÜHRUNGSBEISPIELEN

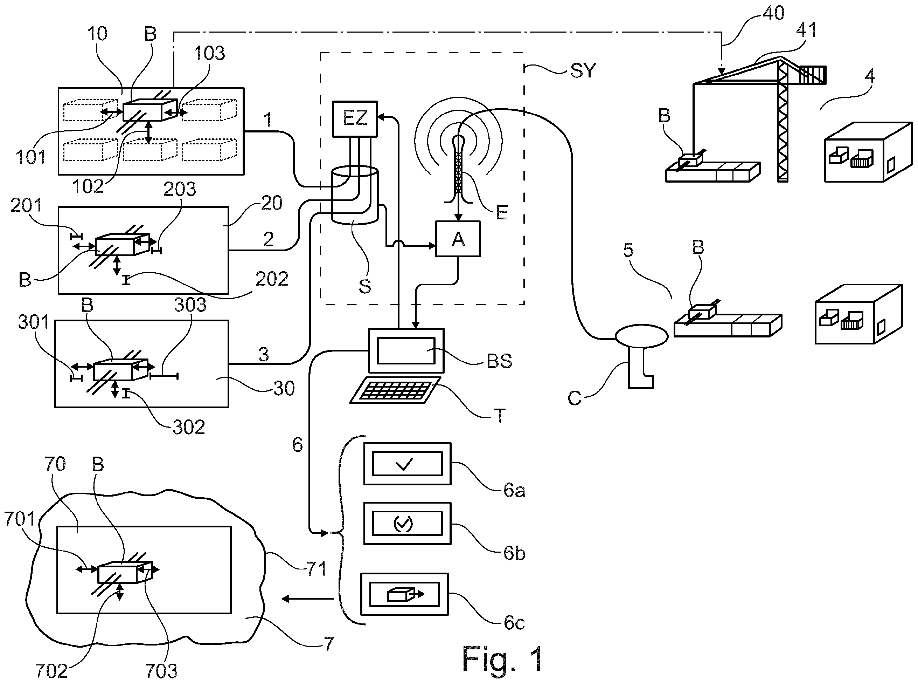

Fig. 1 zeigt eine schematische Darstellung eines computergestützten Verfahrens sowie einer Messeinrichtung gemäß einem Ausführungsbeispiel. Die Messeinrichtung umfasst dabei das System SY, welches eine Erzeugungseinheit EZ, einen Speicher S, eine Empfangseinheit E, sowie eine Analyseeinheit A aufweist. Im in Fig. 1 gezeigten Bild sind die Erzeugungseinheit EZ und die Analyseeinheit A jeweils mit Bildschirm BS verbunden, auf dem ein Nutzer des Systems SY bzw. der gesamten Messeinrichtung zu entsprechender Zeit mittels einer Tastatur T Befehle eingeben kann, oder auf dem einem Nutzer eine Freigabe, Sonderfreigabe oder ein Korrekturvorschlag angezeigt werden können. Weiterhin umfasst die Messeinrichtung eine Kamera und/oder Scanpistole C, deren Funktion weiter unten erläutert wird. Beispielsweise kann die Erzeugungseinheit EZ durch die Eingabe von Befehlen eine Nutzers über die Tastatur T dazu angewiesen werden, Planungsdaten, welche einen angestrebten, "idealen" Einbauzustand eines Bauelements definieren, zu erzeugen und anschließend im Speicher S zu speichern. Dies kann in einem Verfahrensschritt 1 geschehen, durch welchen es zur Erzeugung der Planungsdaten 10 des Bauelements B kommt. Die Planungsdaten können dabei Daten zur Orientierung des Bauelements und/oder zu den Abständen zu benachbarten Bauelementen oder Gebäudeteilen umfassen. Beispielhaft sind in der Figur 1 als Teil der Planungsdaten die horizontalen sowie vertikalen Beabstandungen 101, 102 und 103 des Bauelements B zu benachbarten Bauelementen gezeigt.

Demnach werden gemäß dem in Fig. 1 gezeigten Ausführungsbeispiel in einem ersten Verfahrensschritt 1 zunächst mittels der Erzeugungseinheit EZ Planungsdaten 10 des Bauelements B erzeugt und im Speicher S hinterlegt. Bei dem Speicher S kann es sich um einen internen Speicher handeln, oder aber z.B. auch um einen Speicher in einer Cloud. Mittels der Planungsdaten 10 ist der angestrebte Einbauzustand des Bauelements B definiert. In einem weiteren Verfahrensschritt 2 werden durch die Erzeugungseinheit EZ Toleranzdaten 20 erzeugt, welche Abweichungen von dem angestrebten Einbauzustand angeben, welche aus baurechtlichen und/oder baurechtlichen Erwägungen zugelassen werden können. Beispielhaft sind in Figur 1 auf die lateralen Beabstandungen des Bauelements B von einigen seiner Nachbarelemente bezogene Toleranzbereiche 201, 202 und 203 gezeigt. Durch die Toleranzdaten können unter Umständen sehr strikte Bauvorschriften umgesetzt werden, die in kleinen Toleranzintervallen (beispielhaft in Figur 1 den Intervallen 201, 202 und 203) resultieren, welche unter Berücksichtigung von z.B. Umwelteinflüssen oder Ereignissen berechnet/determiniert wurden, die in bestimmten Regionen beispielsweise Europas als sehr unwahrscheinlich einzustufen sind. Z.B. ist die Erdbebengefahr in vielen Regionen Mitteleuropas gegenüber derjenigen an der US-amerikanischen Pazifikküste gering. Auch können Windlasten an der Küste eine andere Größenordnung annehmen als in einer weit von der Küste entfernten Region. Sind die Toleranzintervalle 201, 202 und 203 vor dem Hintergrund festgelegt, dass sie für z.B. ganz Deutschland baurechtlich bzw. bautechnisch zulässig sind, so können die "strengen" Intervallgrenzen in bestimmten Regionen zu strikt gewählt sein, und bei einer Abweichung im tatsächlichen Einbauzustand muss nicht in jedem Fall eine Korrektur erfolgen. Um solchen Situationen Rechnung zu tragen, können in einem weiteren Verfahrensschritt 3 durch die Erzeugungseinheit EZ Daten 30 erzeugt und anschließend im Speicher S gespeichert werden, welche z.B. Intervalle 301, 302 und 303 um die Beabstandungen 101, 102 und 103 umfassen, welche größer als die korrespondierenden Toleranzintervalle 201, 202, 203 sind, jedoch unter bestimmten Bedingungen am Bau (z.B. in bestimmten Regionen oder bei bestimmten Gebäudeformen oder - höhen) als zulässig bewertet werden können.

In einem nächsten Verfahrensschritt 4 erfolgt die Positionierung des Bauelements B am Ort der geplanten endgültigen Verbauung. Dazu können die Planungsdaten an den Baustellenleiter oder eine weitere befugte Person übermittelt werden, und/oder die auf das Bauelement bezogenen Planungsdaten z.B. an einen Roboter oder Kran 41 übermittelt werden, welcher anschließend automatisiert oder händisch gesteuert die Positionierung des Bauelements am Ort seines späteren endgültigen Einbaus vornimmt. Daran anschließend kann in einem Verfahrensschritt 5 ein Vergleich des tatsächlichen Ist-Zustandes des Bauelements relativ zur Umgebung, zu bereits existierenden Gebäudeteilen und/oder verbauten/positionierten Bauelementen mit dem angestrebten Einbauzustand, welcher durch die Planungsdaten 10 beschrieben wird, durchgeführt werden. Dies kann unter Zuhilfenahme einer Kamera C geschehen, welche ein eigenständiges Element darstellen oder auch Teil der Messeinrichtung sein kann. Die Kamera kann dabei im optischen und/oder infraroten Wellenlängenbereich arbeiten. Es kann sich auch um eine Stereokamera handeln, mittels welcher Tiefenmaße beurteilt werden können. Weiterhin können Bilder durch die Kamera C mittels eines Radars oder eines LASERs gewonnen werden. Zusätzlich oder alternativ kann auch eine Scanpistole zum Einsatz kommen, mittels derer z.B. die Lage des Bauelements B relativ zu Nachbarbauelementen ermittelt werden kann. In letzterem Fall kann es vorteilhaft sein, wenn bestimmte Muster/Markierungen oder auch "halbierte" QR-Codes auf benachbarten Bauelementen angebracht sind, welche sich erst bei einem planungsgerechten Zusammenfügen bzw. eine planungsgerechten Positionierung innerhalb der Toleranzintervalle durch die Scan-Pistole auslesen lassen.

Zur weiteren Durchführung des Vergleichs des temporären Ist-Zustandes mit dem geplanten Einbauzustand können die durch die Kamera oder Scan-Pistole C ermittelten Daten an die Empfangseinheit E des Systems SY gesandt, und anschließend an die Analyseeinheit A weitergeleitet werden. Durch letztere Analyseeinheit A kann der tatsächliche Vergleich durchgeführt werden. Das Ergebnis des Vergleichs kann im Anschluss, in einem Verfahrensschritt 6, einem Nutzer auf dem Bildschirm BS angezeigt werden. Dabei kann entweder eine Freigabe eines nächsten Bauschrittes angezeigt werden, 6a, oder aber angezeigt werden, dass eine Sonderfreigabe erfolgt, 6b. Treffen die beiden vorgenannten Optionen nicht zu, so kann ein Korrekturvorschlag angezeigt werden, 6c, beispielsweise, in welcher Art und Weise das Bauelement zu Repositionieren sei, damit nach nochmaligem Vergleich zwischen dann hergestelltem temporärem Ist-Zustand und geplantem Einbauzustand eine Freigabe erfolgen könnte.

Die mit Verfahrensschritt 6 assoziierten Daten hinsichtlich einer Freigabe, Sonderfreigabe (inklusive konkreter Gründe für die individuelle Sonderfreigabe) oder die Notwendigkeit einer Korrektur können in einem weiteren Verfahrensschritt 7 gespeichert werden. Insbesondere können in Schritt 7 diejenigen Daten 70 des Bauelements B hinterlegt werden, welche den zum endgültigen Einbau (z.B. die Einbetonierung oder anderweitige Fixierung) (sonder-)freigegebenen Zustand beschreiben. In Figur 1 sind dazu beispielhaft die im (sonder-)freigegebenen Ist-Zustand vorliegenden tatsächlich Beabstandungen 701, 702 und 703 gezeigt.

Fig. 3 zeigt ein weiteres Beispiel eines computergestützten Verfahrens zur Analyse der Maßhaltigkeit eines Bauelements. In einem ersten Verfahrensschritt S1 werden Planungsdaten erzeugt und gespeichert. Letztgenannte Planungsdaten definieren bzw. beschreiben dabei einen geplanten Einbauzustand mindestens eines Bauelements. In einem folgenden Verfahrensschritt S2 werden Toleranzdaten des mindestens einen Bauelements erzeugt, welche sich auf Abweichungen vom angestrebten Einbauzustand des Bauelements beziehen, die aus baurechtlichen und/oder bautechnischen Gründen zugelassen werden können. In einem weiteren, optionalen Verfahrensschritt S3 werden Daten erzeugt und gespeichert, welche größere Abweichungen vom geplanten Einbauzustand des Bauelements umfassen, als die in den Toleranzdaten erfassten Abweichungen, wobei es bei späteren tatsächlichen Abweichungen innerhalb der im Rahmen von Schritt S3 definierten Abweichungen zu einer Sonderfreigabe eines Ist-Zustandes des am Einbauort positionierten Bauelements kommen soll. Im Verfahrensschritt S4 wird das mindestens eine Bauelement zum Einbau auf der Baustelle positioniert, allerdings noch nicht endgültig durch z.B. Einbetonieren fixiert. Durch die Positionierung wird ein temporärer Ist-Zustand des mindestens einen Bauelements definiert. Dieser temporäre Ist-Zustand wird in Verfahrensschritt S5 mit dem angestrebten Einbauzustand verglichen. Im Anschluss an den Vergleich wird in Verfahrensschritt S6 eine Entscheidung über den Einbau des mindestens einen Bauelements gefällt. Dabei wird im Unterschritt S6a zunächst geprüft, ob der temporäre Ist-Zustand Abweichungen vom angestrebten Einbauzustand aufweist, welche innerhalb der Toleranzgrenzen, die durch die Toleranzdaten erfasst sind, liegen. Ist dies der Fall, wird in Schritt S7 ein nächster Bauschritt freigegeben. Ist dies nicht der Fall, so wird im Folgenden Unterschritt S6b geprüft, ob eine Sonderfreigabe erfolgen kann. Dies ist dann der Fall, wenn unter Einbeziehung äußerer und innerer Einflüsse auf das Bauelement mittels eines Kriterienkatalogs der temporäre Ist-Zustand ausnahmsweise als zulässig bewertet werden kann. Dabei kann der Kriterienkatalog Daten zu mindestens einem der Einflüsse von Windlasten, Massenlasten, Temperaturschwankungen im Jahresverlauf, Erdbebenwahrscheinlichkeit und/oder Hochwasserwahrscheinlichkeit enthalten. Die Bewertung bzw. eine Festlegung von für eine Sonderfreigabe maximalen Abweichungen vom geplanten Einbauzustand kann automatisiert - mittels eines entsprechenden Algorithmus - oder aber durch Beurteilung durch einen Fachmann erfolgen. Kann der temporäre Ist-Zustand sonderfrei gegeben werden, so folgt Verfahrensschritt S7, die Freigabe eines nächsten Bauschritts. Kann keine Sonderfreigabe erfolgen, so kommt es in Unterschritt S6c zu einem Korrekturvorschlag, durch den eine Repositionierung des Bauelements erreicht werden soll, welche zu einer Freigabe oder einer Sonderfreigabe führen kann. Nach der Repositionierung muss entsprechend wieder geprüft werden, ob es zu einer Freigabe oder Sonderfreigabe kommen kann. Ist eine Korrektur nicht möglich, so kann in Schritt S7' das Bauelement aus seinem temporären Ist-Zustand entfernt werden.

Durch die Abfolge der Unterschritte S6a, S6b und S6c, d.h. die Kaskadierung von Entscheidungen, wird der Prozess der Freigabe eines nächsten Bauschritts beschleunigt. Weiterhin wird in vorteilhafter Weise durch entsprechende Sonderfreigaben erreicht, dass weniger Ausschuss erzeugt wird.

Ergänzend sei daraufhingewiesen, dass "aufweisend" keine anderen Elemente oder Schritte ausschließt und "ein" oder "eine" keine Vielzahl ausschließt. Ferner sei daraufhingewiesen, dass die Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Insbesondere sind Bezugszeichen in den Ansprüchen nicht als Einschränkung anzusehen.

## Patentansprüche

1. **Computergestütztes Verfahren** zur Analyse der Maßhaltigkeit von mindestens einem Bauelement in Bezug auf die Einbauumgebung, das Verfahren aufweisend die Schritte:
- Erzeugen und Speichern von **Planungsdaten** des mindestens einen Bauelements,
wobei die Planungsdaten einen **angestrebten Einbauzustand** des mindestens einen Bauelements definieren,
- Erzeugen und Speichern von **Toleranzdaten** des mindestens einen Bauelements,
wobei die Toleranzdaten **Abweichungen** von dem angestrebten Einbauzustand angeben,
wobei die in den Toleranzdaten erfassten Abweichungen vom angestrebten Einbauzustand baurechtlich/bautechnisch zugelassen werden können,
- **Positionieren** des mindestens einen Bauelements zum Einbau auf der Baustelle,
wobei durch das Positionieren zum Einbau ein **temporärer Ist-Zustand** des mindestens einen Bauelements gegeben ist,
- **Vergleich** des angestrebten Einbauzustandes mit dem temporären Ist-Zustand, das Verfahren **dadurch gekennzeichnet, dass** im Anschluss an die vorherigen Schritte eine Entscheidung über den Einbau nach Maßgabe der nachfolgenden Kriterien getroffen wird,
- **Freigabe** eines nächsten Bauschritts, wenn der temporäre Ist-Zustand Abweichungen vom angestrebten Einbauzustand aufweist, welche durch die Toleranzdaten als zulässig definiert sind,
- **Sonderfreigabe** des temporären Einbauzustandes, wenn der temporäre Ist-Zustand Abweichungen vom angestrebten Einbauzustand aufweist, welche durch die Toleranzdaten als nicht zulässig definiert sind, welche aber unter Einbeziehung äußerer und innerer Einflüsse auf das Bauelement mittels eines Kriterienkatalogs ausnahmsweise als zulässig bewertet werden,
wobei der Kriterienkatalog Daten zu mindestens einem der Einflüsse von Windlasten, Massenlasten, Temperaturschwankungen im Jahresverlauf, Erdbebenwahrscheinlichkeit und/oder Hochwasserwahrscheinlichkeit enthält,
- **Korrektur** des temporären Einbauzustandes, wenn der temporäre Ist-Zustand größere Abweichungen vom angestrebten Einbauzustand aufweist, als in den Toleranzdaten erfasst.

2. Verfahren nach Anspruch 1, weiterhin aufweisend den Schritt:
- **endgültiger Einbau** des mindestens einen Bauelements durch Betonieren, Verkleben mit Draht festbinden, Befestigen mithilfe einer vorgefertigten Einbaulehre, Festnageln auf der Horizontalholzschalung, Befestigen mit Befestigungsmitteln auf einer Schalung.

3. Verfahren nach Anspruch 2, weiterhin aufweisend den Schritt:
- **Erzeugen und Speichern von Einbaudaten** der endgültig eingebauten Bauelemente.

4. Verfahren nach einem der vorherigen Ansprüche, wobei ein **Kran oder Roboter** zur Korrektur des temporären Einbauzustandes eingesetzt wird.

5. Verfahren nach einem der vorherigen Ansprüche, weiterhin aufweisend den Schritt:
- **Erzeugen und Speichern von Korrekturdaten.**

6. Verfahren nach einem der vorherigen Ansprüche, wobei der Vergleich des angestrebten Einbauzustandes mit dem temporären Ist-Zustand zumindest einen der **Unterschritte** aufweist: Vergleich der Lage von Messpunkten/Markierungen auf dem mindestens einem Bauelement und benachbarten Bauelementen, Vergleich der Position von "halbierten" QR Codes auf dem mindestens einen Bauelement und benachbarten Bauelementen, Vergleich von Mustern auf dem mindestens einen Bauelement und benachbarten Bauelementen, Vermessung der Fugenbreiten, Vermessung der Winkel in einem durch mehrere hintereinander angeordnete Bauelemente gegebenen Polygonzug.

7. **Messeinrichtung** zur Analyse der Maßhaltigkeit von mindestens einem Bauelement in Bezug auf die Einbauumgebung nach einem Verfahren der vorherstehenden Ansprüche, die Messeinrichtung aufweisend:
- eine Erzeugungseinheit,
- eine Speichereinheit,
- eine Empfangseinheit,
- eine Analyseeinheit,
wobei die Erzeugungseinheit dazu eingerichtet ist, Planungsdaten und Toleranzdaten des mindestens einen Bauelements zu erzeugen,
wobei die Speichereinheit dazu eingerichtet ist, die Planungsdaten und Toleranzdaten zu speichern,
wobei die Empfangseinheit dazu eingerichtet ist, Daten eines temporären Ist-Zustandes zu empfangen,
wobei die Analyseeinheit dazu eingerichtet ist, den temporären Ist-Zustand mit dem angestrebten Einbauzustand zu vergleichen und zu bewerten/beurteilen.

8. Messeinrichtung nach Anspruch 7, **dadurch gekennzeichnet dass** die Empfangseinheit eine Bildverarbeitungseinheit mit mindestens einer Kamera zur Erfassung eines temporären Einbauzustandes des mindestens einen Bauelements ist.

9. Messeinrichtung nach einem der Ansprüche 7 und 8, wobei die Messeinrichtung beweglich an einem Kran hängt/angebracht ist.

10. Computerprogrammprodukt, welches auf einer Analyseeinheit einer Messeinrichtung nach einem der Ansprüche 7, 8 oder 9 ausführbar ist, und welches Befehle umfasst, die bei der Ausführung durch einen Prozessor eines Computers diesen veranlassen, ein Verfahren nach einem der Ansprüche 1 bis 6 auszuführen.

11. Computerlesbares Medium, auf dem das Computerprogrammprodukt nach Anspruch 10 gespeichert ist.
